# EUROPEAN PATENT APPLICATION

(11) **EP 2 614 882 A1**
(43) Date of publication of application: **17.07.2013**
(21) Application number: 12150804.8
(22) Date of filing: 11.01.2012
(51) Int. Cl.: B01F 3/04, A01G 31/02

(54) **Device for aeration of water**

(71) Applicant: MIR Arastima ve Gelistime A.S., 34220 Istanbul (TR)
(72) Inventor: Memis, Rifat, Istanbul (TR); Koca, Ali Ihsan, Istanbul (TR); Gemici, Zafer, Istanbul (TR)
(74) Representative: Sevinç, Erkan

(57) **Abstract**

The present invention relates to an aeration device (10) for increasing dissolved oxygen in flowing water and supplying the same into a stagnant or flowing water reservoir or water chamber, wherein the device (10) comprises a tubular body (11) having a water inlet (14), a water outlet (16) as well as a subdividing device (40) for separating an incoming water flow into flow lines. Said subdividing device (40) is located at the outlet (16) and comprises a number of wings (30, 30') having an upper surface (31) and a planar bottom surface (32) which is comparatively larger than the upper surface (31); said wings (30, 30') define water passageways (41) narrowing from up to down in direction of water flow through the outlet (16).

## Description

### Technical Field of the Invention

The present invention relates to a device for aerating water in order to increase the amount of dissolved oxygen. The invention particularly refers to a device for conditioning and improving water quality by aeration of running water, e.g. from a pipeline, which device is suitable to improve the water quality of stagnant or flowing water reservoirs especially for use in soilless agriculture.

### Background of the Invention / Prior Art

Conditioning of water by increasing the dissolved oxygen has always been a major concern of those skilled in the art in various practice areas. Fruit and vegetable nurseries, especially the glasshouses for growing of different plants frequently make use of soilless (hydroponic) agriculture, in which case the plant roots are placed into an artificial support media, such as perlite, or are subjected directly to a flowing aqueous nutrition liquid containing the minerals and nutrition materials essential for plant growing. The parameters that affect absorption capability of plant roots include temperature, electrical conductivity and pH as well as the amount of dissolved oxygen in the liquid media. Among the aforesaid parameters, controlling dissolved oxygen in the nutrition liquid is currently a major challenge in the field, especially in growing processes of fruits and vegetables. This is because the amount of oxygen to be dissolved in water is limited to 18 ppm. This value frequently drops down to around 4-5 ppm in the level of the roots within the nutrition liquid. To overcome this drawback, air is needed to be continuously supplied to the said liquid or special chemicals are admixed to the flowing liquid in order to enhance the level of oxygen.

Insufficiency of oxygen has the direct effect that plant growing considerably slows down, and in most cases, results in immature crop due to the reason that transfer of nutrients from the liquid to plant roots declines in the absence of dissolved oxygen. Conditioning of water for other purposes, such as aquariums and fish farms is also gaining importance necessitating new devices and methods for efficient aeration of bulk liquid inside a glassware or pool.

To this end, the present invention, in general, aims at improving the quality of water without using additional means of supplying air (e.g. compressors) and additional chemical agents directed to increase the dissolved oxygen.

There exist numerous devices having different configurations for aeration of water. These devices mainly provide suitable water passageways for converting flowing water into water jets with increased velocity, as disclosed for instance in US 6,270,022 and US 3,672,574. These devices however are merely adopted to aerate water without defining a regular flow regime at the outlet. In other words, a perforated plate and through holes thereon as used in the aforementioned documents are solely for purposes of mixing of water with an amount of air supplied at the outlet along with a water flow having irregular flow regime. Devices with similar configurations have also been disclosed in US 2011/0215175 and US 2,849,217 wherein a mesh with a number of holes for subdividing the water flow at the outlet is provided. These documents aim again at mixing an amount of air with water for water saving or water bubbling purposes rendering them suitable for e.g. watering of gardens or domestic use, as for instance in kitchens and bathroom showers. US 5,803,368 discloses an aerator for water taps, including a labyrinth device with a plurality of labyrinth passageways for reducing water pressure before fed to a water-air mixing chamber. This device operates right in a contrary way of the prior art recited above as it is designed to slow down the linear velocity of the outflowing water.

As may be appreciated by those skilled in the art, prior devices are mainly designed to provide a water-air mixing in a certain level, but are not suitable to supply oxygenated water to a water chamber with minimum degree of disturbance. This is because the water subdivision sections (e.g. meshes or apertures defining a number of water passageways) of well-known devices are adapted to separate water flow in an irregular manner that causes vortexes and high disturbance in a water source or chamber. This is of a major drawback in supplying aerated water to a water supply line of a glasshouse implementing soilless agriculture, or to similar facilities wherein high disturbance in water flow is strictly not desired.

Thus, it is one of the objects of the present invention to provide a water aeration device having water passageways that ensure a regular and linear outflow of water.

Another object of the present invention is to provide a water aeration device designed to ensure a maximum contact area between water and air at the outlet, for increasing the amount of dissolved oxygen without irregularities.

A further object of the present invention is to provide a device adapted to stand in vertical position and above a predetermined level of water, which device is adapted to supply the necessary air to be contacted with outflowing water at the outlet of a subdivider.

Still a further object of the present invention is to provide a device providing minimum disturbance in supplying aerated water to a water line or reservoir.

The aforesaid objectives of the invention are solved by a novel device as disclosed in claim 1, preferred embodiments of which are disclosed in the dependent claims.

### Summary of the Invention

The present invention relates to an aeration device (10) for increasing dissolved oxygen in flowing water and supplying the same into a stagnant or flowing water reservoir or water chamber, wherein the device (10) comprises a tubular body (11) having a water inlet (14), a water outlet (16) as well as a subdividing device (40) for separating an incoming water flow into flow lines. Said subdividing device (40) is located at the outlet (16) and comprises a number of wings (30, 30') having an upper surface (31) and a planar bottom surface (32) which is comparatively larger than the upper surface (31); said wings (30, 30') define water passageways (41) narrowing from up to down in direction of water flow through the outlet (16). With the above arrangement, regular and linear flow regime of the flow lines at the outlet (16) is ensured.

In a preferred embodiment, the an aerator device (10) of the invention further comprises a tubular crown (13) surrounding the tubular body (11). Said crown (13) is fixed to the tubular body (11) with a number of bridging elements (12) such that a gap (15) in between the tubular body (11) and crown (13) is provided for supplying air flow to the flow lines at the outlet (16).

### Brief Description of the Figures

Figure 1 demonstrates cross section of the device according to a preferred embodiment of the present invention.
Figure 2 is a perspective view of a part of a wing that belongs to a subdividing device according to a preferred embodiment of the present invention.
Figure 3 is a subdividing device according to a preferred embodiment of the present invention.
Figure 4a to 4i show bottom view of the subdividing devices according to further embodiments of the present invention.

### Detailed Description of the Invention

The present invention provides a novel aeration device (10) that is configured to supply oxygen rich water into a stagnant or flowing water reservoir with minimum disturbance and vortex. This is achieved through by subdividing the water flow into several flow lines having regular flow regimen at the outlet of the device (10), wherein said flow lines do not interact with each other, but are designed to flow in a parallel manner along with air thereupon. In this way, amount of dissolved oxygen inside the water is efficiently increased while water flow into a water chamber or reservoir with minimum disturbance is constantly ensured.

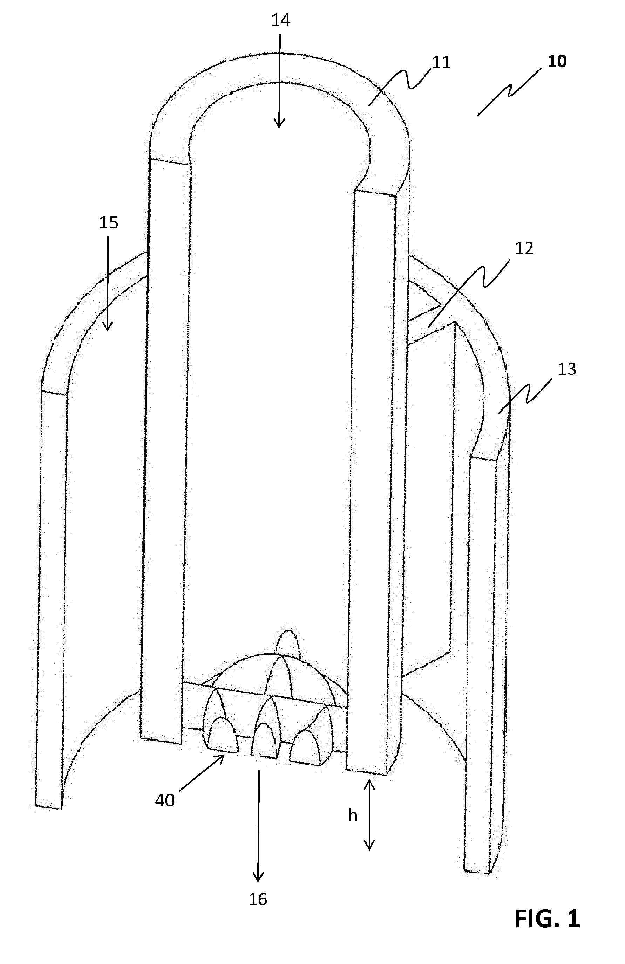

A preferred embodiment of the present invention is shown in Fig. 1. Accordingly, water aeration device (10) of the present invention comprises a tubular body (11) that is adapted to be fixed, for instance to a pipeline or hose, and receive water from an inlet (14) thereof. The inlet (14) of the tubular body may be sized such that it may be directly fixed to outlet of the standardized pipes having diameters, for instance of 20 mm, 25 mm or 32 mm. Right opposite to the aforesaid inlet section (14), the device (10) further comprises a subdividing device (40) located at the outlet (16) of the tubular body (11).

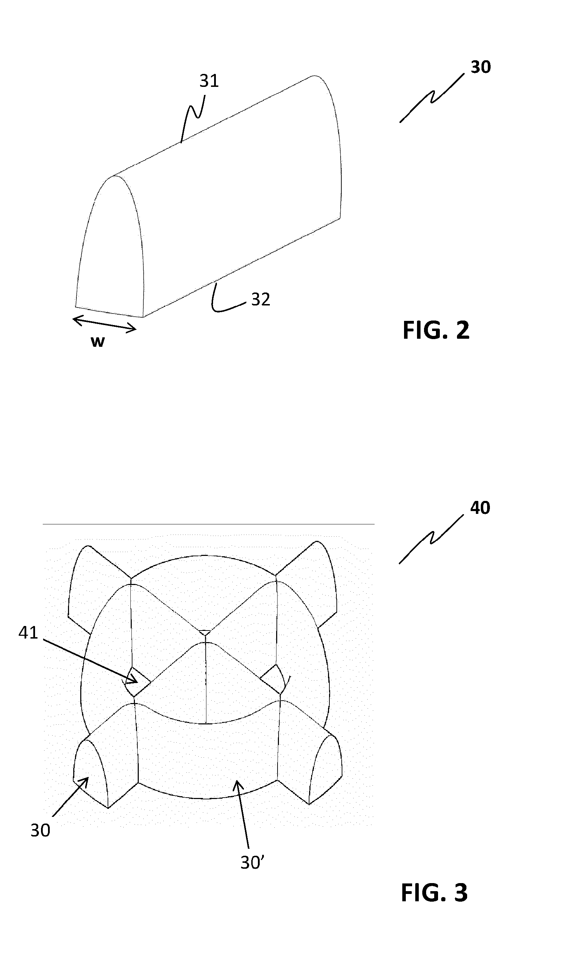

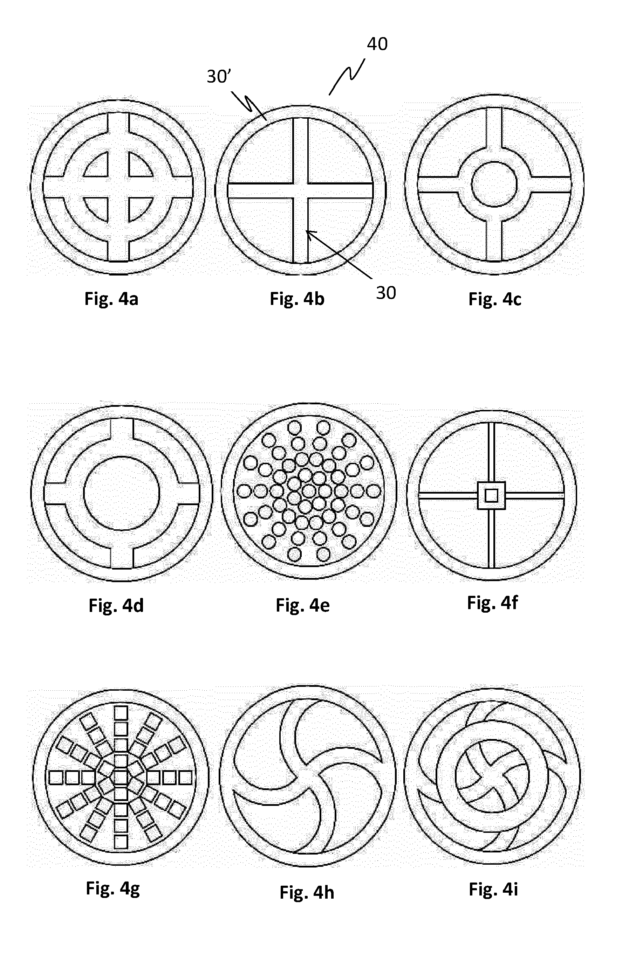

As shown in Figs. 3 and 4, the subdividing device (40) of the present invention comprises a number of wings (30, 30') having different geometries that constitute specially designed water passageways (41). The special design of the water passageways (41) is provided with unique structure of the wings (30) as shown in Fig. 2. Each piece of wing (30, 30') as provided within the underlying idea of the present invention is provided with a narrow upper surface (31) and a larger bottom surface (32) having a width (w). The bottom surface (32) is configured to be planar for better separation and regularity of water flow through the outlet (16). The planar surface has very advantageous properties for better separation of the outlet flow lines. This design is also advantageous with its unique structure as the narrow upper surface (31), preferably in the form of a thin line, faces with the water flow coming through the inlet (14) and separates the same into several flow lines at the outlet (16). The planar and larger bottom surface (32) causes the water flow to continue to move regularly without disturbance. The narrow upper surface (31), on the other hand, smoothly subdivides the water flow with minimum effect in its linear velocity and pressure. One may appreciate for this arrangement that, the more larger the upper surface area (31) of the wing (30, 30') the more resistance to flow is exerted on the water at its first impact on the subdividing device (40). The aforesaid configuration has the further advantage that clogging problem of the water passageways (41) is mostly eliminated.

According to the preferred embodiment as shown in Figs. 2 and 3, cross section of each wing (30, 30') is arranged in the shape of a peak or parabola resembling a triangle. It may be appreciated however that said cross section can be formed as an exact triangle or in another shape equivalent in function with the proviso of the relatively narrower size of the upper surface (31) with respect to width (w) the bottom surface (32).

According to a further embodiment, aerator device (10) of the present invention is provided with tubular crown (13) surrounding the inner tubular body (11) and having connections thereto with a number of vertically aligned bridging elements (12) such that a gap (15) in between the tubular body (11) and crown (13) is provided for air flow. The mentioned gap (15) preferably comprises thorough channels formed by longitudinally arranged bridging elements (12). As the number of the bridging elements (12) and thorough channels increase, these then behave as a filter preventing dirtiness and unwanted particles to be mixed with the air flowing down through the intermediate channels (15). In this embodiment, the tubular crown (13) is arranged to stand in upright position as shown in Fig. 1 when placed vertically inside a reservoir or water chamber. The inner tubular body (11) having the subdividing device (40) in its bottom area is fixed within the tubular crown (13) such that, when the crown (13) stands in upright position the inner tubular body (11) is held at a level (h) relative to the bottom section of the crown (13). This has the major advantage that water flow lines coming through the outlet (16) and the air received through the gap (15) have sufficient area to interact before rushing into the water of reservoir or water chamber. The tubular crown (13), therefore has three major functions, namely; providing the necessary air to the outlet (16), holding the inner tubular body (11) at a level (h) above its bottom section and functioning as a filter for prevention of dirtiness and unwanted particles to come along with the air.

Another preferred feature in relation to the device (10) is provided with elongated upper section of the inner tubular body (11) extending out from the crown (13). Referring again to Fig. 1, the upper section of the tubular body (11) is arranged above the crown (13). In a way explained above, a sufficient margin is left for readily fixing said upper section to a pipeline or water hose.

The inventors report that aeration device (10) of the present invention provides good results in all modes of use for increasing dissolved oxygen in stagnant or flowing water reservoirs. In a mode, where the device (10) is located above the water level of a reservoir, it was observed that device (10) was providing water flow lines hitting the bulk water in a regular manner with minimum disturbance and vortex, while enabling the water to travel along with the air supplied from the intermediate gap (15) and medium, and dive into said bulk water together with the air carried during the aforesaid travel. In another mode, where the device (10) is submerged into bulk water, air was continued to be carried out through the gap (15) and properly mixed with regular flow at the outlet (16), which again caused efficient aeration with minimum of disturbance in water of the reservoir.

The advantageous properties explained hereinabove are believed to be provided by virtue of the special design of the wings (30, 30') of the subdividing device (40), the specific crown (13) as well as the further components advantageously integrated into the device (10) as alluded above.

In further embodiments of the present invention, there are provided a number of alternative geometries for the subdividing device (40) by arranging the wings (30, 30') in desired shapes. Bottom views of the subdividing devices (40) are shown in Figs. 4a to 4i. In all of the embodiments, the wings (30, 30') are arranged such that their upper surfaces (31) are narrower than their bottom surfaces (32). As a consequence of this arrangement, water passageways (41) of the subdividing device (40) takes the form of apertures narrowing from up to down in the direction of flow. In this way, the first confronting surface against the water coming down through the inlet (14) will be much more reduced; hence the pressure drop and irregular flow regime are considerably reduced as well.

As shown in Figures 4a, 4b, 4c, 4d, 4f, 4h and 4i, the profiles may be formed by straight wings (30) and arcuate wings (30') in order to form the desired pattern. These embodiments with larger water passageways (41) may be very useful for aeration of water, particularly in glasshouses wherein the nutrition water is circulated for plant growing but potentially containing dirtiness and particles such as soil and pieces of roots and leaflets. To increase the effectiveness of oxygen transfer through the water, more than one layer of wings (30, 30') may be provided as shown in Fig. 4i.

The subdividing device (40) of the present invention may also be arranged with more frequent water passageways (41) as shown in Figs. 4e and 4g, although are not desirable for glasshouses using relatively dirtier nutrition water. This kind of subdividing devices (40) may however be desirable for use in facilities using cleaner water, such as aquariums and industrial water based processes.

Further embodiments and application areas of the present invention will be apparent to those skilled in the art considering the attached figures and description above.

## Claims

1. An aeration device (10) for increasing dissolved oxygen in flowing water and supplying the same into a stagnant or flowing water reservoir or water chamber, the device (10) comprising a tubular body (11) having a water inlet (14), a water outlet (16) as well as a subdividing device (40) for separating an incoming water flow into flow lines, **characterized in that**; the subdividing device (40) is located at the outlet (16) and comprises a number of wings (30, 30') having an upper surface (31) and a planar bottom surface (32) which is comparatively larger than the upper surface (31); said wings (30, 30') defining water passageways (41) narrowing from up to down in direction of water flow through the outlet (16).

2. An aerator device (10) according to claim 1, wherein the subdividing device (40) comprises linear wings (30) and arcuate wings (30') defining water passageways (41) in desired geometries.

3. An aerator device (10) according to claim 1, wherein the subdividing device (40) comprises wings in irregular shape such that water passageways (41) in the form of numerous holes is provided.

4. An aerator device (10) according to any of the claims 1 to 3 wherein the device (10) further comprises a tubular crown (13) surrounding the tubular body (11), said crown (13) being fixed to the tubular body (11) with a number of bridging elements (12) such that a gap (15) in between the tubular body (11) and crown (13) is provided for air flow to the flow lines at the outlet (16).

5. An aerator device (10) according to claim 4 wherein the gap (15) between tubular body (11) and crown (13) comprises thorough channels formed by longitudinally arranged bridging elements (12).

6. An aerator device (10) according to claim 4 wherein inner tubular body (11) has an elongated upper section extending out from the crown (13) such that a sufficient margin is left for fixing said upper section to a pipeline or water hose.

7. An aerator device (10) according to claim 4 wherein the tubular body (11) is fixed within the tubular crown (13) such that, when the crown (13) stands in upright position the inner tubular body (11) is held at a level (h) relative to the bottom section of the crown (13).

8. An aerator device (10) according to claim 1 wherein the subdividing device (40) comprises more than one layer of wings (30, 30') providing additional separation for water flow.

9. Use of the aeration device (10) according to any of the preceding claims for growing plants in soilless agriculture.

10. The use according to claim 9 wherein said soilless agriculture is carried out in a glasshouse equipped with a nutrition liquid circulation system.
